# FASCICULE DE BREVET EUROPEEN

(11) **EP 0 387 313 B1**
(45) Date de publication et mention de la délivrance du brevet: **19.04.1995**
(21) Numéro de dépôt: 89907188.0
(22) Date de dépôt: 08.06.1989
(51) Int. Cl.: H04M 1/72

(54) **SYSTEME DE COMMUNICATION ET DE GESTION DE DONNEES PRIVEES**
KOMMUNIKATIONS- UND STEUERUNGSSYSTEM VON PRIVATEN DATEN
A SYSTEM FOR COMMUNICATING AND MANAGING PRIVATE DATA

(30) Priorité: 08.07.1988 FR 8809700
(43) Date de publication de la demande: 19.09.1990
(73) Titulaire: Parienti, Raoul, 06000 Nice (FR)
(72) Inventeur: Parienti, Raoul, 06000 Nice (FR)
(86) Numéro de dépôt international: FR8900291
(87) Numéro de publication internationale: WO9000844

(56) Documents cités:
- EP-A- 0 030 708
- EP-A- 0 236 180
- WO-A-3//04462
- FR-A- 2 593 656

## Description

Le besoin croissant des communications dans l'entreprise, l'accroissement notable des flux humains dans une enceinte définie posent des problèmes inextricables de recherche de personnes, de gestion des appels, de gestion et de contrôle des accès, de gestion des horaires et des communications en général.

Aujourd'hui, bien des entreprises se sont pourvues de moyens modernes de communication associés à des systèmes sophistiqués de recherche de personnes, utilisant : badges personnalisés, transmetteurs V H F, mais tous ces systèmes sont connectés avec des systèmes trop classiques de téléphonie filiaire de sorte qu'à ce jour il n'existe pas de système cohérent et homogène utilisant de concert, les possibilités des supports actuels de transmission non filiaire associés aux multiples possibilités de l'informatique et prenant en compte le difficile problème de l'espace hertzien pléthorique réglementé.

Le brevet EP 0 030 708 vise un système de transmission avec recherche de personnes. Le système décrit dans ce brevet comprend une série de postes reliés à un central et des dispositifs de commande reliés à une ligne de connexion.

Le système prévoit une série d'appareils d'abonnés sans fil comportant un code individuel et des moyens d'émission réception susceptibles d'être reliés aux postes. Lors d'un appel, le central de commande renvoie automatiquement une information de l'abonné qui appelle à partir du poste le plus proche. Le central détermine alors l'établissement d'une liaison entre l'abonné appelé et l'abonné appelant.

Une telle disposition présente notamment l'inconvénient d'encombrer l'espace radio et l'utilisation d'un code individuel pour chaque appareil est insuffisant pour constituer une bonne sécurité.

Le demandeur a proposé dans la demande de brevet français n° 86.01277 (FR-A-2.593.656) un système comportant une multitude de centrales émission/réception infrarouge pouvant communiquer avec des portatifs. Toutefois, un tel système correspond sensiblement à l'usage des cabines téléphoniques.

La présente invention palie les divers inconvénients de la technique antérieure en proposant un système souple, cohérent et homogène permettant de gérer avec un seul boîtier portatif, les communications, les accès, les déplacements etc... dans une enceinte donnée.

Le système, selon l'invention, est constitué d'un central téléphonique privé géré par un système informatique, recevant une pluralité de lignes téléphoniques d'abonnés et connecté à une pluralité de bornes fixes adressées au même titre qu'un poste téléphonique et pouvant dialoguer par une liaison infrarouge multiplexée avec un ensemble de combinés portatifs pourvus d'un clavier et intégrant des moyens pour recevoir un signal sélectif radio-fréquence et agencé pour recevoir une carte à mémoire et comportant un lecteur pour ladite carte à mémoire, caractérisé en ce que chaque combiné portatif est banalisé et non adressé, et est personnalisé par l'introduction d'une carte à mémoire dans le lecteur dudit combiné, ladite carte à mémoire comportant pré-enregistré le code personnel identifiant l'utilisateur, ce code étant préalablement enregistré dans le système informatique, à chaque connexion, le code étant émis à des fins de contrôle et de gestion par le système informatique.

Le système permet, grâce à un combiné portatif, de joindre toute personne dans l'entreprise sans encombrer l'espace radio-fréquence, d'échanger des messages alphanumériques entre différentes personnes de l'entreprise, de pointer les entrées/sorties de l'entreprise et ainsi de gérer les horaires de travail, de gérer les accès et les déplacements des personnes dans l'entreprise.

Le dispositif décrit dans le présent brevet comprend essentiellement un ensemble de bornes adressées (chaque borne se voit attribuer un numéro, tout comme un poste téléphonique classique, dédié à un local défini) et un ensemble de combinés portatifs banalisés, mais équipés d'un lecteur pouvant recevoir une carte à mémoire qui comporte un ou plusieurs microcircuits et/ou tout autre support mémoire connu, tels que du type magnétique, électrostatique, holograhique ou optique. Ladite carte à mémoire dédiée à un utilisateur défini va personnaliser le combiné. L'ensemble des bornes adressées est connecté par l'intermédiaire de lignes secondaires à un central informatisé relié lui-même à un ordinateur de gestion et, à un système classique de recherche de personnes.

Tous les dialogues, combinés portatifs-bornes s'effectuent par une liaison infra-rouge multiplexée autorisant plusieurs combinés portatifs à dialoguer avec une seule borne, comme le définit le brevet cité en référence ci-dessus. La carte à mémoire introduite dans le portatif intègre tous les éléments propres à l'utilisateur. Avant de recevoir ladite carte à mémoire, le portatif est banal et anonyme. Si un utilisateur extrait sa carte à mémoire d'un portatif donné pour l'introduire dans un autre, ce dernier peut oeuvrer exactement comme le précédent. Autrement dit, c'est la carte qui donne tous les éléments personnalisants au combiné portatif. La carte à mémoire peut mémoriser, dans un support convenable, décrit précédement, un ensemble d'éléments tels qu'un numéro propre à l'utilisateur, la définition de la qualité du possesseur de la carte, son profil, tous les éléments identifiant l'utilisateur. La carte à mémoire contient en outre une zone mémoire utilisée à des fins de gestion d'horaires, une zone mémoire utilisée à des fins d'autorisation d'accès, une zone mémoire destinée à recevoir des données, une zone mémoire destinée à gérer les appels personnels et une zone mémoire déstinée à toutes les utilisations potentielles futures.

Par ailleurs, une fois introduite dans le lecteur, la carte à mémoire va donner au combiné portatif son code d'identification de telle sorte que lors de tout échange entre le combiné portatif et une borne, le combiné portatif va commencer par émettre le code identifiant mémorisé dans la carte à mémoire propre à chaque porteur.

D'autre part, à l'instar du code identifiant émis en infra-rouge attribué exclusivement après l'introductin d'une carte à mémoire dans le combiné portatif, le système de réception radio fréquence unilatéral intégré dans le combiné, se voit attribuer le même code par la carte à mémoire personnelle. Tout se passe en fait comme si c'est la carte que l'on cherche à joindre et non pas le combiné portatif qui ne joue alors qu'un rôle passif de vecteur de transmission. En ce qui concerne le central téléphonique, il est, comme il est dit plus haut, géré et orchestré par un ordinateur. Ledit ordinateur comprend une mémoire. Cette mémoire est agencée de telle sorte que chaque porteur de carte se voit attribuer une zone déterminée de ladite mémoire par un adressage convenable. Autrement dit, chaque fois qu'un combiné portatif entre en relation avec le système, le combiné portatif envoie le code identifiant de la carte à mémoire vers le central lequel central envoie ledit code vers l'ordinateur ; ledit ordinateur va vérifier s'il y a un message destiné au porteur de la carte appelant. Sit tel est le cas, le porteur de la carte reçoit l'ensemble des données par le biais d'une liaion infra-rouge multipléxée et via le combiné portatif, ces données sont mémorisées sur un support adapté de la carte à mémoire.

Outre les messages adressés, dès que l'utilisateur entre en contact avec le système, il peut recevoir d'autres types d'informations telles que messages d'intérêt général et différentes données liées par exemple à la gestion de quelque nature que ce soit. Tous les échanges entre la borne et le combiné portatif s'effectuant via la liaison infra-rouge multiplexée assure un haut niveau de confidentialité.

Le système présenté dans le présent brevet permet de vérifier l'adéquation appelé/appelant avant d'acheminer un appel. A cet effet, dès l'instant où un utilisateur X tente d'appeler un utilisateur Y, l'ordinateur va analyser si le couple X/Y est autorisé ou non. Cette procédure est aisée car, comme nous l'avons décrit précédemment, le combiné portatif commence toujours par émettre le code de l'appelant mémorisé sur la carte à mémoire de ce dernier.

Dès l'instant où un usager essaie d'en joindre un autre, il a à composer également le numéro du code propre au destinataire. Par conséquent, l'ordinateur peut analyser aisément le couple appelé/appelant en analysant le couple code de l'appelé/code de l'appelant. Si ledit couple n'est pas frappé d'interdiction par le logiciel de l'ordinateur, la procédure d'appel est déclenchée. Dans le cas contraire, elle ne se l'est pas.

Ce contrôle à priori permet d'assurer une bonne marche des communications entre entreprises, de hierarchiser certains appels téléphoniques et d'adapter le mouvement des communications en fonction des besoins de telle ou telle entreprise. La procédure d'appel en elle-même est effectuée en deux temps. Ainsi, lorsqu'une personne désire en joindre une autre, le signal est acheminé par la liaison filaire et il déclenche, dans un premier temps, un appel acoustique et/ou lumineux de la borne dédiée à la personne appelée. Si la personne demandée n'est pas à son poste habituel et, par conséquent, ne répond pas, dans un délai défini, l'ordinateur déclenche l'émission par voie radio du code personnel attribué par la carte à mémoire à la personne recherchée. Cette procédure permet de limiter au strict minimum l'émission de codes par la voie radio fréquence.

Le système décrit ci-dessus permet également de communiquer des messages entre différentes personnes de l'entreprise. Ce transfert de messages peut se faire, soit en temps réel dans la mesure où le destinataire est présent et disponible, soit en temps différé dans le cas contraire.

L'utilisateur dispose sur le combiné portatif personnalisé par sa carte à mémoire, d'un clavier alphanumérique. Il introduit sur ledit clavier le message ainsi que le code personnel du ou des destinataire(s). L'ordinateur recevant ces éléments enregistre les données, ainsi que les codes émetteur/récepteur du message. Dans un premier temps, il analyse la compatibilité entre les codes émetteur / récepteur et déclenche ensuite la procédure de transfert des messages. Si le destinataire est présent dans l'entreprise, la procédure d'acheminement est identique à celle décrite plus haut lors d'un appel de type phonique. Le destinataire rentre en contact avec le système et reçoit dès cet instant le message qui lui est destiné. Ledit message sera alors mémorisé dans un espace mémoire de la carte à mémoire attribuée au destinataire et/ou sur tout support mémoire du combiné portatif. Le destinataire a alors tout loisir pour exploiter ledit message grâce à l'écran intégré au combiné portatif. Si le destinataire n'est pas disponible, ou absent, il percevra le message comme il a été défini plus haut dès l'instant où il rentrera en contact avec le système.

Le système permet également d'utiliser le combiné portatif à des fins de machine à pointer et, par extension, il permet de gérer les horaires de travail. Chaque fois qu'un employé pénètre dans l'entreprise, il doit appuyer sur une touche spécifique du clavier du combiné portatif et ainsi provoque l'émission d'un code pointage incluant son code personnel. Il procède de même lorsqu'il quitte l'entreprise. Ainsi, il est aisé de connaitre en temps réel l'état de ces horaires pour chaque employé. L'ensemble des données liées à la gestion des horaires est mémorisé sur un support mémoire de la carte à mémoire de chaque utilisateur. Le système peut aussi assurer la gestion de présence et des accès. A cet effet, l'utilisateur habilité à pénétrer dans tel ou tel local émet, à l'entrée dudit local, un signal infra-rouge intégrant son code identifiant. Si le système informatique donne son consentement, il permet l'ouverture dudit local. De la même façon, un utilisateur peut signaler sa présence en un lieu donné à un moment donné. Dès l'instant où il active son combiné portatif à proximité d'une borne, le code personnel de l'utilisateur est émis vers cette borne. L'informatique interprète, par conséquent, la présence de la personne en question dans un lieu défini. Ce type d'information peut être centralisé et visualisé sur un système ad hoc permettant à tout moment de savoir qui est où et où est qui.

Le système décrit dans le présent brevet permet également à tout un chacun de pouvoir passer des appels personnels sans se soucier d'être pris en défaut car la carte à mémoire personnelle intègre un espace mémoire réservé à la gestion des appels personnels. L'ensemble des débours occasionnés par ce type d'appels fait l'objet d'une comptabilité particulière par exemple, ces frais peuvent être soustraits de la rémunération de l'employé, ou encore l'employé peut acquérir au départ un certain nombre de taxes qu'il a réglé d'avance, lesquelles taxes sont chargées sur un support mémoire convenable de sa carte à mémoire personnelle.

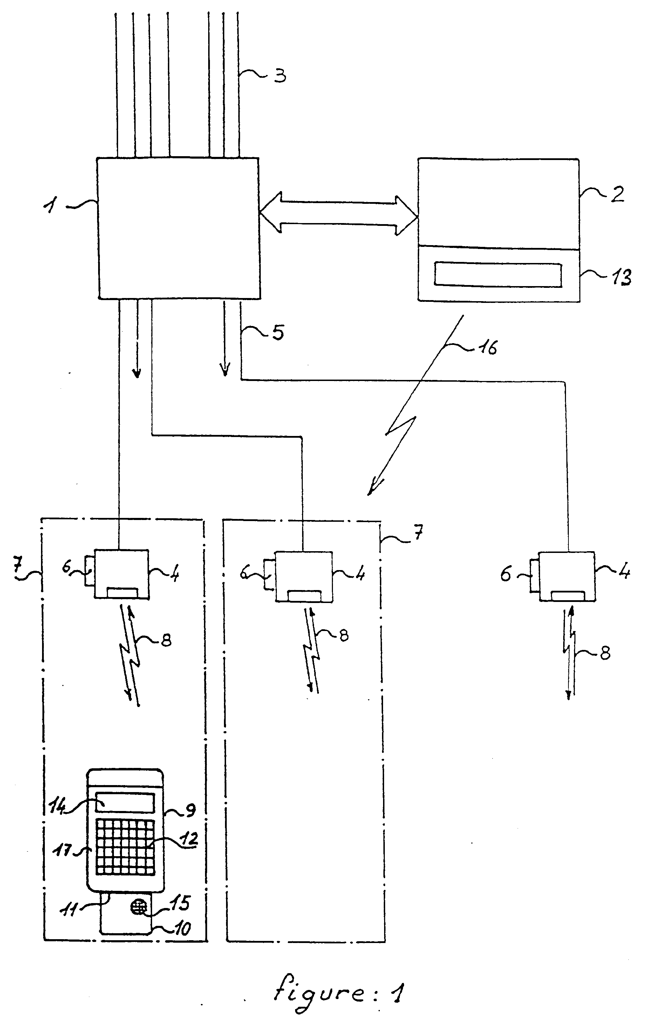

On décrira maintenant, à titre d'exemple non limitatif, un mode de réalisation particulier de l'invention en référence à la figure 1 annexée.

On voit à la figure 1 , un central téléphonique privé (1), connecté à une pluralité de lignes d'abonnés (3), le dit central et géré par un ordinateur (2), lequel intègre une mémoire (13).

Le dit ordinateur (2) gère les appels et les transferts de données entre les bornes (4), et les combinés portatifs (9), il autorise ou interdit la connection appelants / appelés, et déclenche l'émission unilatérale des codes radio fréquence (16) quand c'est nécessaire.

Un ensemble de bornes est relié au central téléphonique privé (1) par l'intermédiaire de lignes secondaires (5).

Chaque borne (4) est adressée, et dédiée à un ocal donné (7). Elle est pourvue d'un avertisseur sonore et / ou optique (6).

Chaque borne (4) est conçue pour dialoguer avec plusieurs combinés portatifs (9), par une liaison infra-rouge multiplexée (8).

Chaque combiné portatif (9) comprend un clavier (12), un écran (14), et reçoit l'ensemble des caractéristiques propres à l'utilisateur grace à une carte à mémoire (10), pourvue d'un support mémoire (15).

La dite carte est introduite dans un lecteur (11).

Chaque combiné portatif (9) est conçu pour dialoguer avec une borne (4), pouvant échanger de la phonie et / ou des données comme il est explicité dans les brevets cités en référence par une liaison infra-rouge multiplexée (8).

Chaque combiné portatif (9) comporte également les moyens pour recevoir un signal radio fréquence unilatéral sélectif (17), dont le code est attribué par la carte à mémoire (10) de l'utilisateur.

## Revendications

1. Système de communication et de gestion de données constitué d'un central téléphonique privé (1) géré par un système informatique (2), recevant une pluralité de lignes téléphoniques d'abonnés (3) et connecté à une pluralité de bornes fixes (4) adressées au même titre qu'un poste téléphonique et pouvant dialoguer par une liaison infrarouge multiplexée (8) avec un ensemble de combinés portatifs (9) pourvu d'un clavier et intégrant des moyens pour recevoir un signal sélectif radio - fréquence (17) et agencé pour recevoir une carte à mémoire (10) et comportant un lecteur (11) pour ladite carte à mémoire, caractérisé en ce que chaque combiné portatif (9) est banalisé et non adressé, et est personnalisé par l'introduction d'une carte à mémoire (10) dans le lecteur (11) dudit combiné, ladite carte à mémoire comportant pré-enregistré le code personnel identifiant l'utilisateur, ce code étant prélablement enregistré dans le système informatique, à chaque connexion, le code étant émis à des fins de contrôle et de gestion par le système informatique.

2. Système de communication, selon la revendication 1, caractérisé en ce que le clavier comporte une touche spécifique provoquant l'émission d'un code de pointage cor respondant au code personnel identifiant l'utilisateur et mémorisé dans la carte à mémoire (10).

3. Système de communication selon la revendication 1, caractérisé en ce qu'il est prévu un signal sélectif radio-fréquence (16) correspondant à chaque carte à mémoire (10).

4. Système de communication selon les revendications 1 et 2, caractérisé en ce que le système informatique (2) relié au central (1) dispose de zones mémoires (13) adressées par les codes identifiant des cartes à mémoire (10) en utilisation.

5. Système de communication selon les revendications 1, 2, 3 et 4, caractérisé en ce que le central (1) est agencé afin, lorsqu'il reçoit un code personnel émis par un combiné portatif (9) à proximité d'une borne (4), de consulter le système informatique (2) en vue de chercher dans une zone mémoire (13) adressée un éventuel message ou différentes données destinées à l'utilisateur appelant et, dans l'affirmative, de renvoyer à l'utilisateur l'ensemble des données qui lui sont attribuées par la liaison infrarouge multiplexée (8), lesdites données étant affichées sur un écran (14) dont est pourvu le combiné portatif (9).

6. Système de communication, selon les revendications 1 et 2, caractérisé en ce que le système informatique (2) est agencé afin de vérifier l'adéquation des codes personnels appelés/appelants, afin d'autoriser ou non la procédure d'appel lorsque une demande de mise en communication d'un combiné portatif (9) avec un autre combiné portatif est effectuée.

7. Système de communication, selon les revendications 1, 2 et 6, caractérisé en ce qu'il comporte des moyens pour provoquer le déclenchement des moyens de signalisation (6) acoustique et/ou optique sur la borne (4) appelée lors d'une procédure d'appel, le système informatique (2) étant agencé pour déclencher l'émission (16) par radio-fréquence du code personnel pré-enregistré dans la carte à mémoire (10) de la personne correspondante si aucune réponse n'a été envoyée à la borne d'appel (4) dans un délai déterminé.

8. Système de communication, selon les revendications 1, 2, 4 et 5, caractérisé en ce que le clavier (12) d'un combiné portatif (9) permet de charger dans la zone mémoire (13) du système informatique (2) des messages destinés à un ou plusieurs destinataires correspondant aux codes pré-enregistrés sur les cartes à mémoire (10) correspondantes.

9. Système de communication selon les revendications 6, 7 et 8, caractérisé en ce que le système informatique comporte des moyens de vérification d'accès qui commandent l'ouverture ou non à partir de l'émission du code de pointage envoyé à travers une borne fixe (4) et correspondant au code personnel pré-enregistré sur la carte à mémoire.

10. Système de communication, selon les revendications 1, 2 et 3, caractérisé en ce que le système informatique comporte des moyens de mise en mémoire du lieu où se situe l'utilisateur à partir de l'émission du code de pointage envoyé à travers une borne fixe (4) correspondant au code personnel pré-enregistré sur la carte à mémoire.

11. Système de communication, selon la revendication 1, caractérisé en ce que la carte à mémoire (10) comporte un espace mémoire réservé à la gestion des appels personnels.

## Patentansprüche

1. System zur Kommunikation und zur Steuerung von Daten, welches aus einer privaten Telefonzentrale (1) gebildet ist, die durch ein Datenverarbeitungssystem (2) gesteuert ist, eine Mehrzahl von Telefon-Amtsleitungen (3) bedient und mit einer Mehrzahl fester Anschlußgeräte (4) verbunden ist, welche wie ein Telefonapparat adressiert sind und über eine multiplexierte Infrarotverbindung (8) mit einer Gruppe tragbarer Handgeräte (9) in Dialog treten können, welche mit einer Tastatur versehen sind, Mittel (17) zum Empfangen eines selektiven HF-Signals enthalten, dazu eingerichtet sind, eine Speicherkarte (10) aufzunehmen, und ein Lesegerät (11) für die genannte Speicherkarte aufweisen, dadurch gekennzeichnet, daß jedes tragbare Handgerät (9) allgemein zugänglich und unadressiert ist und durch Einführen einer Speicherkarte (10) in das Lesegerät (11) des genannten Handgeräts personalisiert wird, wobei die genannte Speicherkarte den persönlichen, den Benutzer kennzeichnenden Code voreingegeben enthält, welcher Code zuvor in dem Datenverarbeitungssystem abgespeichert wurde, und wobei der Code bei jeder Verbindung zwecks Kontrolle und Steuerung durch das Datenverarbeitungssystem ausgesendet wird.

2. System zur Kommunikation nach Anspruch 1, dadurch gekennzeichnet, daß die Tastatur eine spezielle Taste aufweist, die das Aussenden eines Kennungscode bewirkt, der dem persönlichen Code entspricht, welcher den Benutzer kennzeichnet und in der Speicherkarte (10) gespeichert ist.

3. System zur Kommunikation nach Anspruch 1, dadurch gekennzeichnet, daß ein selektives HF-Signal (16) in Entsprechung zu jeder Speicherkarte (10) vorgesehen ist.

4. System zur Kommunikation nach den Ansprüchen 1 und 2, dadurch gekennzeichnet, daß das Datenverarbeitungssystem (2), das mit der Zentrale (1) verbunden ist, Speicherbereiche (13) zur Verfügung stellt, die durch die Code adressiert sind, welche die in Benutzung befindlichen Speicherkarten (10) kennzeichnen.

5. System zur Kommunikation nach den Ansprüchen 1, 2, 3 und 4, dadurch gekennzeichnet, daß die Zentrale (1) so eingerichtet ist, daß sie, wenn sie einen persönlichen Code empfängt, der von einem tragbaren Handgerät (9) in der Nähe eines Anschlußgerätes (4) ausgesandt wird, das Datenverarbeitungssystem (2) abfragt, um in einem adressierten Speicherbereich (13) eine möglicherweise vorhandene Nachricht oder verschiedene Daten zu ermitteln, die für den anrufenden Benutzer bestimmt sind, und, im zutreffenden Falle, an den Benutzer die ihm zugeordnete Datengruppe über die multiplexierte Infrarotverbindung (8) zu übermitteln, wobei die genannten Daten auf einem Bildschirm (14) dargestellt werden, mit dem das tragbare Handgerät (9) versehen ist.

6. System zur Kommunikation nach den Ansprüchen 1 und 2, dadurch gekennzeichnet, daß das Datenverarbeitungssystem (2) dazu eingerichtet ist, die Übereinstimmung der persönlichen Code von Angerufenem/Anrufendem zu verifizieren, um das Anrufverfahren zu gestatten oder nicht, wenn ein Antrag, eine Verbindung zwischen einem tragbaren Handgerät (9) und einem anderen tragbaren Handgerät aufzubauen, gestellt wird.

7. System zur Kommunikation nach den Ansprüchen 1, 2 und 6, dadurch gekennzeichnet, daß es Mittel aufweist, um die Auslösung einer akustischen und/oder optischen Signaleinrichtung (6) an dem angerufenen Anschlußgerät (4) bei einer Anrufprozedur hervorzurufen, daß das Datenverarbeitungssystem (2) dazu eingerichtet ist, die Aussendung des persönlichen Code, welcher in der Speicherkarte (10) der betreffenden Person voreingegeben ist, durch Hochfrequenz (16) einzuleiten, wenn während einer vorbestimmten Zeitdauer keine Antwort an dem angerufenen Anschlußgerät (4) eintrifft.

8. System zur Kommunikation nach den Ansprüchen 1, 2, 4 und 5, dadurch gekennzeichnet, daß die Tastatur (12) eines tragbaren Handgerätes (9) es ermöglicht, in den Speicherbereich (13) des Datenverarbeitungssystems (2) Nachrichten einzugeben, welche für einen oder mehrere Empfänger bestimmt sind, entsprechend den Code, die in die entsprechenden Speicherkarten (10) voreingegeben sind.

9. System zur Kommunikation nach den Ansprüchen 6, 7 und 8, dadurch gekennzeichnet, daß das Datenverarbeitungssystem Mittel zur Verifikation des Zugriffs aufweist, welche aufgrund der Aussendung des Kennungscode, der über ein festes Anschlußgerät (4) versendet wird und einem persönlichen Code entpricht, der in die Speicherkarte voreingegeben ist, den Zugang freigibt oder nicht.

10. System zur Kommunikation nach den Ansprüchen 1, 2 und 3, dadurch gekennzeichnet, daß das Datenverarbeitungssystem Mittel aufweist, um aufgrund der Aussendung des Kennungscode, der über ein festes Anschlußgerät (4) versendet wird und einem persönlichen Code entspricht, der in die Speicherkarte voreingegeben ist, den Ort speichert, wo sich der Benutzer befindet.

11. System zur Kommunikation nach Anspruch 1, dadurch gekennzeichnet, daß die Speicherkarte (10) einen Speicherbezirk enthält, der für das Durchführen persönlicher Anrufe vorbehalten ist.

## Claims

1. A system of communication and data management, consisting of a
private telephone exchange which is managed by a dfata system (2) and receives a plurality of subscribers' telephone lines (3) and is connected to a plurality of fixed terminals (4) each of which is addressed in the same sort of way as a telephone-station and is able to converse through a multiplexed infrared connection (8) with a group of portable combined sets (9) each provided with a keyboard and integrating means of receiving a selective radio-frequency signal (17) and arranged to receive a memory card (10) and including a reader (11) for the said memory card, characterized in that each portable combined set (9) is twoway and not addressed and is personalized by the introduction of a memory card (10) into the reader of the said combined set, the said memory card having prerecorded in it the personal code which identifies the user and has previously been recorded in the data system, the code being emitted at each connection for purposes of checking and management by the data system.

2. A system of communication as in Claim 1, characterized in that
the keyboard includes a specific key which causes the emission of a checking code corresponding with the personal code identifying the user and memorized in the memory card (10).

3. A system of communication as in Claim 1, characterized in that
a selective radio-frequency signal (16) is provided to correspond with each memory card (10).

4. A system of communication as in Claims 1 and 2, characterized in that
the data system (2) connected to the exchange (1) has at its disposal memory zones (13) which are addressed by the codes identifying memory cards (10) in use.

5. A system of communication as in Claims 1, 2, 3 and 4, characterized
in that the exchange is so arranged that when it receives a personal code emitted by a portable combined set (9) close to a terminal (4), it consults the data system (2) with a view to searching in an addressed memory zone (13) for a possible message or different data intended for the user who is calling, and if there is such, sends the user through the multiplexed infrared connection the whole of the data which are assigned to him, the said data being displayed on a screen (14) with which the portable combined set (9) is provided.

6. A system of communication as in Claims 1 and 2, characterized in that
the data system (2) is arranged so as to verify the adequacy of the personal called/calling codes in order to authorize the call procedure or not when a request is made for putting one portable combined set (9) into communication with another portable combined set.

7. A system of communication as in Claims 1, 2, and 6, characterized
in that it includes means of causing the triggering of the acoustic and/or optical means of signalling (6) on the called terminal (4) at the time of a call procedure, the data system (2) being arrangeed to trigger the emission (16) by radio frequency of the personal code prerecorded in the memory card (10) of the corresonding person if no reply has been sent to the call terminal (4) within a certain length of time.

8. A system of communication as in Claims 1, 2, 4 and 5, characterized
in that the keyboard (12) of a portable combined set (9) enables messages to be loaded into the memory zone (13) of the data system (2), which are intended for one or more addressees corresponding with the codes prerecorded on the corresponding memory cards (10).

9. A system of communication as in Claims 6, 7, and 8, characterized
in that the data system includes means of verification of access which control the opening or not from the emission of the checking code sent through a fixed terminal (4) and corresponding with the personal code prerecorded on the memory card.

10. A system of communication as in Claims 1, 2, and 3, characterized
in that the data system includes means of placing in memory the place where the user is situated from the emission of the checking code sent through a fixed terminal (4) and corresponding with the personal code prerecorded on the memory card.

11. A system of communication as in Claim 1, characterized in that
the memory card (10) includes a memory space reserved for the management of the personal calls.
